# EUROPEAN PATENT APPLICATION

(11) **EP 4 117 056 A1**
(43) Date of publication of application: **11.01.2023**
(21) Application number: 20923223.0
(22) Date of filing: 08.10.2020
(51) Int. Cl.: H01M 4/36, H01M 4/38, H01M 4/48, H01M 4/505, H01M 4/525, H01M 4/587

(54) **ELECTRODE MATERIAL AND BATTERY**

(30) Priority: 03.03.2020 JP 2020036065
(71) Applicant: Panasonic Intellectual Property Management Co., Ltd., Osaka-shi, Osaka 540-6207 (JP)
(72) Inventor: KAMITAKE, Hiroki, Osaka 540-6207 (JP); MINEYA, Kunihiko, Osaka 540-6207 (JP); FUKUOKA, Ayumu, Osaka 540-6207 (JP)
(74) Representative: Eisenführ Speiser
(86) International application number: PCT/JP2020/038177
(87) International publication number: WO 2021/176759

(57) **Abstract**

An electrode material 1000 of the present disclosure includes an active material 110 and a solid electrolyte 100. The length of an interface 120 between the active material 110 and the solid electrolyte 100 per unit area of the cross section of the electrode material 1000 is 0.29 µm/µm² or more, and the filling rate of the electrode material 1000 is 80% or more. A battery 2000 of the present disclosure includes a first electrode 201, a second electrode 203, and an electrolyte layer 202 positioned between the first electrode 201 and the second electrode 203. At least one selected from the group consisting of the first electrode 201 and the second electrode 203 includes the electrode material 1000 of the present disclosure.

## Description

### TECHNICAL FIELD

The present disclosure relates to an electrode material and a battery.

### BACKGROUND ART

Patent Literature 1 discloses a method of manufacturing a battery for forming favorable conduction paths of electrons and ions.

### CITATION LIST

### Patent Literature

Patent Literature 1: JP 2014-192061 A

### SUMMARY OF INVENTION

### Technical Problem

In conventional arts, a further improvement in charge capacity of a battery is desired.

### Solution to Problem

An electrode material of the present disclosure includes:
an active material; and
a solid electrolyte, wherein
a length of an interface between the active material and the solid electrolyte per unit area of a cross section of the electrode material is 0.29 µm/µm² or more, and
a filling rate of the electrode material is 80% or more.

### Advantageous Effects of Invention

According to the present disclosure, it is possible to improve the charge capacity of a battery.

### BRIEF DESCRIPTION OF DRAWINGS

FIG. 1 is a cross-sectional view schematically showing the configuration of an electrode material of Embodiment 1.
FIG. 2 is a cross-sectional view schematically showing the configuration of a battery of Embodiment 2.

### DESCRIPTION OF EMBODIMENTS

### (Findings on which the Present Disclosure is Based)

All-solid-state lithium-ion batteries are required to have a structure in which both electrons and lithium ions are efficiently supplied to active materials dispersed in electrodes. General positive electrodes and negative electrodes are desired to have an electrode structure having both of: an electron conduction path formed by contact between active material particles; and an ion conduction path formed by contact and connection between solid electrolyte particles. However, the conventional arts fail to elucidate an electrode structure exhibiting favorable characteristics of all-solid-state batteries.

### (Overview of One Aspect according to the Present Disclosure)

An electrode material according to a first aspect of the present disclosure includes:
an active material; and
a solid electrolyte, wherein
a length of an interface between the active material and the solid electrolyte per unit area of a cross section of the electrode material is 0.29 µm/µm² or more, and
a filling rate of the electrode material is 80% or more.

According to the first aspect, it is possible to achieve both of the lithium-ion conduction path and the electron conduction path, thereby improving the charge capacity of a battery.

In a second aspect of the present disclosure, for example, in the electrode material according to the first aspect, a content of the active material in the electrode material may be 40 wt% or more and 80 wt% or less. According to such a configuration, the active material and the solid electrolyte can easily form a favorable dispersion state.

In a third aspect of the present disclosure, for example, in the electrode material according to the first or second aspect, the solid electrolyte may have lithium-ion conductivity. According to such a configuration, it is possible to provide a high-capacity lithium-ion battery by using the electrode material.

In a fourth aspect of the present disclosure, for example, in the electrode material according to any one of the first to third aspects, the length of the interface may be 0.95 µm/µm² or less. According to such a configuration, it is possible to further decrease the internal resistance of the electrode material.

In a fifth aspect of the present disclosure, for example, in the electrode material according to the fourth aspect, the length of the interface may be 0.571 µm/µm² or less. According to such a configuration, it is possible to further decrease the internal resistance of the electrode material.

In a sixth aspect of the present disclosure, for example, in the electrode material according to any one of the first to fifth aspects, the filling rate may be 99% or less. According to such a configuration, it is possible to achieve even higher capacity of the battery.

In a seventh aspect of the present disclosure, for example, in the electrode material according to the sixth aspect, the filling rate may be 93.1% or less. According to such a configuration, it is possible to achieve even higher capacity of the battery.

In an eighth aspect of the present disclosure, for example, in the electrode material according to any one of the first to seventh aspects, the active material may be a negative electrode active material. According to such a configuration, it is possible to further improve the charge capacity of the battery.

In a ninth aspect of the present disclosure, for example, in the electrode material according to the ninth aspect, the negative electrode active material may include at least one selected from the group consisting of graphite, silicon, a silicon alloy, a silicon oxide, tin, a tin alloy, and a tin oxide. According to such a configuration, it is possible to provide a battery having high charge capacity and excellent charge and discharge characteristics.

In a tenth aspect of the present disclosure, for example, in the electrode material according to the ninth aspect, the negative electrode active material may include graphite. According to such a configuration, it is possible to provide a battery having high charge capacity and excellent charge and discharge characteristics.

In an eleventh aspect of the present disclosure, for example, in the electrode material according to any one of the first to seventh aspects, the active material may be a positive electrode active material. According to such a configuration, it is possible to improve the charge capacity of the battery.

In a twelfth aspect of the present disclosure, for example, in the electrode material according to the eleventh aspect, the positive electrode active material may include a metal composite oxide. According to such a configuration, it is possible to improve the charge capacity of the battery.

In a thirteenth aspect of the present disclosure, for example, in the electrode material according to the twelfth aspect, the metal composite oxide may include: at least one selected from the group consisting of Mn, Co, Ni, and Al; and Li. According to such a configuration, it is possible to improve the charge capacity of the battery.

A battery according to a fourteenth aspect of the present disclosure includes:
a first electrode;
a second electrode; and
an electrolyte layer positioned between the first electrode and the second electrode, wherein
at least one selected from the group consisting of the first electrode and the second electrode includes the electrode material according to any one of the first to thirteenth aspects.

According to the fourteenth aspect, it is possible to improve the charge capacity of the battery.

Embodiments of the present disclosure will be described below with reference to the drawings.

### (Embodiment 1)

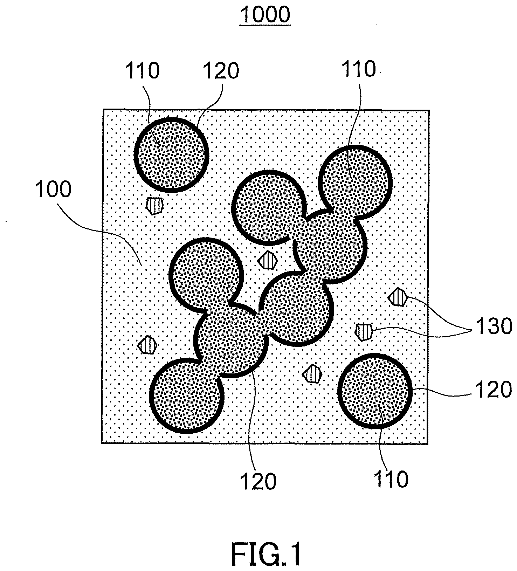

FIG. 1 is a cross-sectional view schematically showing the configuration of an electrode material 1000 of Embodiment 1.

The electrode material 1000 of Embodiment 1 includes a solid electrolyte 100, an active material 110, an interface 120, and a void 130. The interface 120 is an interface formed by contact between the solid electrolyte 100 and the active material 110.

The electrode material 1000 may be molded. In the present description, the term "cross section of the electrode material 1000" means a cross section of the molded electrode material 1000, typically, a cross section of the electrode. FIG. 1 shows a cross section of the electrode material 1000 molded in a desired shape.

The active material 110 is particulate. In the electrode material 1000, particles of the active material 110 are in contact with each other, thereby forming an electron conduction path. The solid electrolyte 100 fills between the particles of the active material 110. The solid electrolyte 100 may also be particulate. A large number of particles of the solid electrolyte 100 are compressed to be bonded to each other, thereby forming an ion conduction path.

Here, an observation area obtained by observing the cross section of the electrode material 1000 is defined as A (unit: µm²). The total length of the interface 120 observed in the observation area is defined as L (unit: µm). The interfacial perimeter Z is defined as Z = L/A. The interfacial perimeter Z in the electrode material 1000 is 0.29 µm/µm² or more.

The following method can be, for example, used as the method of calculating the interfacial perimeter Z.

The electrode material 1000 is processed with a cross section polisher to form a smooth cross section. At this time, the direction of the cross-section process may be any direction of the electrode material 1000. For example, in the case where the electrode material 1000 is plate-like, a cross section parallel to the in-plane direction of the plate-like electrode material 1000 may be formed, a cross section parallel to the thickness direction of the plate-like electrode material 1000 may be formed, or a cross section parallel to neither the in-plane direction nor the thickness direction may be formed.

The formed cross section is observed with a scanning electron microscope (SEM) to obtain a cross-sectional image. Since it is desirable to evaluate the average form of the electrode material 1000, a sufficiently large region desirably should be observed with the SEM with respect to the median diameter of a group of the particles of the active material 110 included in the electrode material 1000. For example, in the case where the median diameter of the group of the particles of the active material 110 included in the electrode material 1000 is defined as D (unit: µm), the observation area A satisfies A ≥ (20D)².

Next, from the obtained cross-sectional image, a measurement region in which the observation area A satisfies A ≥ (20D)² is selected and analyzed with image processing software Image J. The Analyze Particles function of Image J is used to determine the active material 110 or the solid electrolyte 100 as a particle in the cross-sectional image of the electrode material 1000. The length of the interface 120 between the active material 110 and the solid electrolyte 100 is calculated. The total perimeter of the particles is calculated by this image analysis method.

There is a possibility that other material such as a binder, a dispersant, or a conductive additive, is present at the interface between the solid electrolyte 100 and the active material 110. However, in the case where these materials are not distinctly observed in the cross-sectional image, target particles are subjected to calculation of the total perimeter.

Furthermore, as shown in FIG. 1, a separated particle sometimes appears in the cross-sectional image. However, there is a possibility that though a particle is separated in the cross-sectional image, the particle is in contact with another particle at a position that does not appear in the cross section. Accordingly, separated particles may be subjected to calculation of the total perimeter.

Next, the total perimeter is divided by the observation area to calculate the length of the interface between the active material and the solid electrolyte per unit area, that is, the interfacial perimeter Z.

In the case where the particles of the active material 110 or the particles of the solid electrolyte 100 are aggregated in the cross-sectional image, either the aggregate of the particles of the active material 110 or the aggregate of the particles of the solid electrolyte 100 is determined as particles. Thus, it is possible to easily perform image recognition of the interface 120 between the active material 110 and the solid electrolyte 100. For example, in the case where the solid electrolytes 100 are connected to each other to form a single large aggregate in the cross-sectional image, the perimeter of this large agglomerate means the length of the interface 120 between the active material 110 and the solid electrolyte 100. Furthermore, depending on the dispersion state of the particles in the electrode material 1000, selection is performed as to which of the aggregate of the active material 110 or the aggregate of the solid electrolyte 100 should be subjected to particle determination with the image analysis software.

In the case where calculation of the total perimeter by image analysis is difficult due to an influence by voids, a conductive additive, etc., or a low contrast between the active material 110 and the solid electrolyte 100, the cross-sectional image may be appropriately subjected to image processing to facilitate particle determination with the image processing software. In the case where image processing on the cross-sectional image is difficult, the interface in the cross-sectional image may be traced to prepare another image such that the other image is subjected to image processing to calculate the interfacial perimeter Z.

Furthermore, to remove noise after the image processing, relatively small particles among particles subjected to the particle determination are not applied to calculation of the interfacial perimeter. Specifically, particles having a cross-sectional area of 1% or less with respect to the average cross-sectional area of particles determined as particles in the cross-sectional image are not applied to calculation of the interfacial perimeter.

In the electrode material 1000, the proportion of the void 130 in the space of the unit volume is defined as ε, and a filling rate P (%) is defined as P = (1 - ε) × 100. The filling rate P in the electrode material 1000 is 80% or more.

The filling rate can be calculated from the volume of the electrode material 1000, the weight of the electrode material 1000, the true density of the active material 110, the true density of the solid electrolyte 100, and the mixing ratio of the materials. Note that the filling rate may be calculated by other method such as a pycnometer method.

According to the above configuration, it is possible to improve the charge capacity of the battery.

In the present description, the term "charge capacity" means the charge capacity of the battery per unit weight of the active material 110.

Patent Literature 1 discloses that favorable charge and discharge characteristics are achieved by the following structure in which: a granulated powder formed by active materials and solid electrolytes has an average particle diameter of 20 to 53 µm; and the active materials are adjacent to each other and the solid electrolytes are adjacent to each other in the granulated powder. However, the dispersion state of the active materials and the solid electrolytes is not elucidated.

On the other hand, as a result of intensive studies by the present inventors, it was found that the interfacial perimeter between an active material and a solid electrolyte and the filling rate of an electrode exert a great influence on the characteristics of an all-solid-state lithium-ion battery. The interfacial perimeter is an index indicating the lithium-ion conduction path formed by the solid electrolyte in the electrode, and is also an index indicating the feature of interface formation between the active material and the solid electrolyte in the electrode. During charge and discharge of the all-solid-state battery, the longer the interfacial perimeter is, the easier transfer of lithium ions in the active material present in the electrode is. The filling rate is an index indicating the feature of the contact state of the active material and the solid electrolyte in the molded electrode. A low filling rate indicates that the contact between the solid electrolytes, the contact between the solid electrolyte and the active material, and the contact between the active materials are weak, and decreases the charge capacity. In particular, in the case where the interfacial perimeter is long, the rate of the solid electrolyte present between the active materials increases, and accordingly the electronic conductivity in the electrode achieved by the contact between the active materials is likely to decrease. Accordingly, also in the case where the interfacial perimeter is long, a low filling rate, which indicates a weak contact between the active materials, decreases the electronic conductivity in the electrode. As a result, the charge capacity decreases.

Therefore, to solve the above problem to achieve a high-capacity all-solid-state lithium-ion battery, it is necessary to increase the interfacial perimeter and the filling rate to achieve both of the lithium-ion conduction path and the electron conduction path in the electrode.

According to the configuration of the present disclosure, when the cross section of the electrode material 1000, that is, the cross section of the electrode is observed, the interfacial perimeter Z is 0.29 µm/µm² or more and the filling rate P of the electrode material 1000 is 80% or more. At this time, both of the lithium-ion conduction path and the electron conduction path can be achieved, thereby improving the charge capacity of the battery.

In Embodiment 1, the interfacial perimeter Z may 0.29 µm/µm² or more and 0.95 µm/µm² or less. In the case where the interfacial perimeter Z is 0.95 µm/µm² or less, the lithium-ion conduction path formed by the solid electrolyte 100 is not excessively long, and accordingly an increase in internal resistance of the electrode material 1000 can be suppressed. This enables the battery to operate at a high power. Furthermore, the interfacial perimeter Z may be 0.571 µm/µm² or less. Thus, the internal resistance of the electrode material 1000 can be further decreased.

The method of controlling the interfacial perimeter Z to 0.29 µm/µm² or more is not particularly limited. The interfacial perimeter Z can be controlled, for example, by a step of kneading the active material 110 and the solid electrolyte 100. In a step of producing the electrode material 1000, to mix a powder of the active material 110 and a powder of the solid electrolyte 100, it is desirable to select a kneading method in which a shear force is easily applied to a group of particles. For example, an automatic mortar, a planetary centrifugal mixer, or a mixer having stirring blades may be used. Furthermore, it is desirable that, in the produced electrode material 1000, the solid electrolyte 100 and the active material 110 should form a favorable dispersion state and are uniformly mixed. Note that the processing time required for uniform mixing varies depending on the material used for the electrode material 1000. Accordingly, it is recommended, in producing the electrode material 1000, to appropriately collect a portion of the electrode material 1000 during the kneading step to measure the interfacial perimeter Z.

The filling rate P of the electrode material 1000 of Embodiment 1 may be 80% or more. In the case where the filling rate P is 80% or more, the contact between the active material 110 and the solid electrolyte 100 is sufficiently achieved, and accordingly the charge capacity improves. Furthermore, the filling rate P may be 99% or less. In the case where the filling rate P is 99% or less, it is possible to suppress a decrease in charge capacity caused by the occurrence of cracking in the particles of the active material 110 due to the influence of expansion and contraction of the active material 110 in the charge and discharge process of the battery. This enables to achieve higher capacity of the battery. Moreover, the filling rate P may be 93.1% or less. This enables to achieve even higher capacity of the battery.

The method of controlling the filling rate P of the electrode material 1000 to 80% or more is not particularly limited. The filling rate is controlled, for example, by a compression step after mixing the active material 110 and the solid electrolyte 100. In the compression step, for example, a hydraulic press or a mechanical press can be used. Furthermore, a thermal press for heating the electrode material 1000 may be used in the compression step. Note that the required pressing pressure, the required heating temperature, and the required processing time vary depending on the material used for the electrode material 1000. For example, setting the pressing pressure to 1000 MPa or more might cause the occurrence of cracking of the active material 110 or the occurrence of cracking of the electrode material 1000 due to residual stress. In the compression step, suitable conditions are selected depending on the material used for the electrode material 1000.

As the solid electrolyte 100, for example, a solid electrolyte having lithium-ion conductivity can be used. In this case, it is possible to provide a high-capacity lithium-ion battery by using the electrode material 1000.

As the solid electrolyte 100, at least one selected from an inorganic solid electrolyte and an organic solid electrolyte can be used. The solid electrolyte 100 may include at least one selected from the group consisting of a sulfide solid electrolyte, an oxide solid electrolyte, a halide solid electrolyte, a polymer solid electrolyte, and a complex hydride solid electrolyte. Specific examples of the sulfide solid electrolyte, the oxide solid electrolyte, the halide solid electrolyte, the polymer solid electrolyte, and the complex hydride solid electrolyte will be shown in Embodiment 2. At least one selected from the group consisting of all the solid electrolytes exemplified in Embodiment 2 can be used as the solid electrolyte 100.

To achieve a favorable dispersion state, the solid electrolyte 100 should desirably be formed of a soft material. From this viewpoint, a sulfide solid electrolyte and/or a halide solid electrolyte is suitable as the solid electrolyte 100.

The shape of the solid electrolyte 100 of Embodiment 1 is not particularly limited, and may be, for example, acicular, spherical, ellipsoidal, or flaky. For example, the shape of the solid electrolyte 100 may be particulate.

The shape of the active material 110 of Embodiment 1 is not particularly limited, and may be, for example, acicular, spherical, or ellipsoidal. For example, the shape of the active material 110 may be particulate.

For example, in the case where the shape of the solid electrolyte 100 of Embodiment 1 is particulate (e.g., spherical), the median diameter of the solid electrolyte 100 may be 0.01 µm or more and 100 µm or less. In the case where the median diameter is 0.01 µm or more, the contact interface between the particles of the solid electrolyte 100 does not excessively increase, and accordingly an increase in ion resistance inside the electrode material 1000 can be suppressed. This enables the battery to operate at a high power.

In the case where the median diameter of the solid electrolyte 100 is 100 µm or less, the active material 110 and the solid electrolyte 100 can easily form a favorable dispersion state in the electrode material 1000. This facilitates achievement of higher capacity of the battery.

The median diameter of the solid electrolyte 100 of Embodiment 1 may be smaller than the median diameter of the active material 110. Thus, the solid electrolyte 100 and the active material 110 can form a more favorable dispersion state in the electrode material 1000.

The median diameter of the active material 110 of Embodiment 1 may be 0.1 µm or more and 100 µm or less.

In the case where the median diameter of the active material 110 is 0.1 µm or more, the active material 110 and the solid electrolyte 100 can easily form a favorable dispersion state in the electrode material 1000. This improves the charge characteristics of the battery.

In the case where the median diameter of the active material 110 is 100 µm or less, the diffusion rate of lithium in the active material 110 sufficiently improves. This enables the battery to operate at a high power.

The median diameter of the active material 110 may be larger than the median diameter of the solid electrolyte 100. Thus, the active material 110 and the solid electrolyte 100 can form a favorable dispersion state.

The active material 110 of Embodiment 1 includes a material having properties of occluding and releasing metal ions (e.g., lithium ions). The active material 110 includes, for example, a negative electrode active material. As the negative electrode active material, a metal material, a carbon material, an oxide, a nitride, a tin compound, a silicon compound, or the like can be used. The metal material may be a metal simple substance. Alternatively, the metal material may be an alloy. Examples of the metal material include lithium metal and a lithium alloy. Examples of the carbon material include natural graphite, coke, semi-graphitized carbon, a carbon fiber, spherical carbon, artificial graphite, and amorphous carbon. From the viewpoint of capacity density, at least one selected from the group consisting of silicon (Si), tin (Sn), a silicon compound, and a tin compound can be suitably used.

The active material 110 may include, for example, a positive electrode active material. Examples which can be used as the positive electrode active material include a metal composite oxide, a transition metal fluoride, a polyanion material, a fluorinated polyanion material, a transition metal sulfide, a transition metal oxysulfide, and a transition metal oxynitride. In particular, in the case where a lithium-containing transition metal oxide is used as the positive electrode active material, the manufacturing cost can be reduced and the average discharge voltage can be increased.

In Embodiment 1, the metal composite oxide selected as the active material 110 may contain Li and at least one element selected from the group consisting of Mn, Co, Ni, and Al. Such materials include Li(NiCoAl)O₂, Li(NiCoMn)O₂, and LiCoO₂. The positive electrode active material may be, for example, Li(NiCoMn)O₂.

The active material 110 may include a single active material, or may include a plurality of active materials having different compositions.

According to the above configuration, it is possible to improve the charge capacity of the battery.

In Embodiment 1, the particle of the solid electrolyte 100 and the particle of the active material 110 may be in contact with each other as shown in FIG. 1.

The electrode material 1000 of Embodiment 1 may include particles of the solid electrolyte 100 and particles of the active material 110.

In Embodiment 1, the content of the solid electrolyte 100 and the content of the active material 110 may be the same, or may be different from each other.

When the total amount of the electrode material 1000 is defined as 100 wt%, the content of the active material 110 can be, for example, 40 wt% or more and 80 wt% or less. Appropriate adjustment of the content of the active material 110 facilitates the active material 110 and the solid electrolyte 100 to form a favorable dispersion state.

The electrode material 1000 may include only the active material 110 and the solid electrolyte 100. In other words, the electrode material 1000 may consist substantially of the active material 110 and the solid electrolyte 100. According to such a configuration, the energy density of the battery can be improved. The phrase "include only the active material 110 and the solid electrolyte 100" means that other materials are not intentionally included in the electrode material 1000 except for inevitable impurities.

In general, the term "median diameter" means the particle diameter at a cumulative volume equal to 50% in the volumetric particle size distribution. The volumetric particle size distribution is measured, for example, by a laser diffraction measurement device.

### (Embodiment 2)

Embodiment 2 will be described below. The description overlapping that in Embodiment 1 above will be omitted as appropriate.

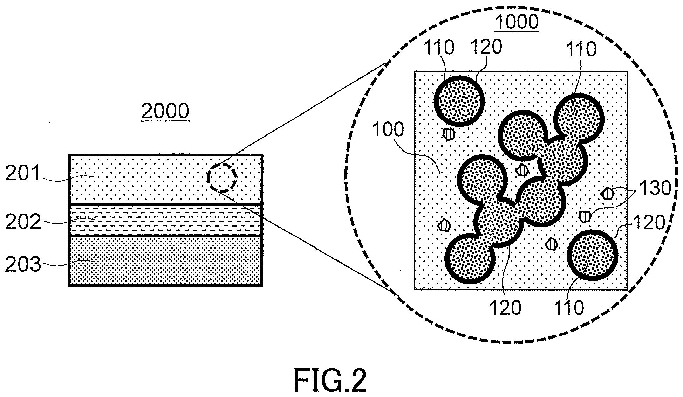

FIG. 2 is a cross-sectional view schematically showing the configuration of a battery 2000 of Embodiment 2.

The battery 2000 of Embodiment 2 includes a first electrode 201, an electrolyte layer 202, and a second electrode 203.

The first electrode 201 includes the electrode material 1000.

The electrolyte layer 202 is disposed between the first electrode 201 and the second electrode 203.

According to the above configuration, it is possible to improve the charge capacity of the battery 2000.

In the weight ratio "w: 100 - w" of the active material 110 to the solid electrolyte 100 included in the first electrode 201, 40 ≤ w ≤ 80 may be satisfied. In the case where 40 ≤ w is satisfied, the energy density of the battery 2000 is sufficiently achieved. Furthermore, in the case where w ≤ 80 is satisfied, the battery 2000 can operate at a high power.

The thickness of the first electrode 201 may be 10 µm or more and 500 µm or less. In the case where the thickness of the first electrode 201 is 10 µm or more, the energy density of the battery 2000 is sufficiently achieved. In the case where the thickness of the first electrode 201 is 500 µm or less, the battery 2000 can operate at a high power.

The electrolyte layer 202 is a layer including an electrolyte. The electrolyte is, for example, a solid electrolyte. In other words, the electrolyte layer 202 may be a solid electrolyte layer.

As the solid electrolyte included in the electrolyte layer 202, for example, an inorganic solid electrolyte having lithium-ion conductivity is used. As the inorganic solid electrolyte, a sulfide solid electrolyte, an oxide solid electrolyte, a halide solid electrolyte, or the like is used.

As the solid electrolyte included in the electrolyte layer 202, a halide solid electrolyte may be used.

The halide solid electrolyte is represented, for example, by the following composition formula (1). In the composition formula (1), α, β, and γ are each independently a value greater than 0. The element M includes at least one element selected from the group consisting of a metalloid element and a metal element other than Li. The element X includes at least one selected from the group consisting of F, CI, Br, and I.

LiαMβXγ ... Formula (1)

Metalloid elements include B, Si, Ge, As, Sb, and Te. Metal elements include all the elements included in Groups 1 to 12 of the periodic table except for hydrogen, and all the elements included in Groups 13 to 16 of the periodic table except for B, Si, Ge, As, Sb, Te, C, N, P, O, S, and Se. In other words, metal elements are a group of elements that can become cations when forming an inorganic compound with a halogen compound.

As the halide solid electrolyte, Li₃YX₆, Li₂MgX₄, Li₂FeX₄, Li(Al, Ga, In)X₄, Li₃(Al, Ga, In)X₆, or the like may be used.

According to the above configuration, it is possible to improve the output density of the battery 2000. Furthermore, it is possible to improve the thermal stability of the battery 2000 to suppress generation of a noxious gas such as hydrogen sulfide.

In the present disclosure, when an element in a formula is expressed such as "(Al, Ga, In)", this expression indicates at least one element selected from the group of elements in parentheses. In other words, the expression "(Al, Ga, In)" is synonymous with the expression "at least one selected from the group consisting of Al, Ga, and In". The same applies to other elements. The halide solid electrolyte exhibits excellent ionic conductivity.

In the composition formula (1), M may contain Y (= yttrium). In other words, the halide solid electrolyte included in the electrolyte layer 202 may contain Y as a metal element.

The halide solid electrolyte containing Y may be a compound represented by the following composition formula (2).

LiₐM_{b}Y_{c}X₆ ... Formula (2)

The composition formula (2) satisfies a + mb + 3c = 6 and c > 0. In the composition formula (2), M contains at least one element selected from the group consisting of a metalloid element and a metal element other than Li and Y. The symbol m represents the valence of M. The element X contains at least one selected from the group consisting of F, CI, Br, and I. The element M contains at least one selected from the group consisting of Mg, Ca, Sr, Ba, Zn, Sc, Al, Ga, Bi, Zr, Hf, Ti, Sn, Ta, and Nb. Specific examples which can be used as the halide solid electrolyte containing Y include Li₃YF₆, Li₃YCl₆, Li₃YBr₆, Li₃YI₆, Li₃YBrCl₅, Li₃YBr₃Cl₃, Li₃YBr₅Cl, Li₃YBr₅I, Li₃YBr₃I₃, Li₃YBrI₅, Li₃YClI₅, Li₃YCl₃I₃, Li₃YCl₅I, Li₃YBr₂Cl₂I₂, Li₃YBrCl₄I, Li_{2.7}Y_{1.1}Cl₆, Li_{2.5}Y_{0.5}Zr_{0.5}Cl₆, and Li_{2.5}Y_{0.3}Zr_{0.7}Cl₆.

According to the above configuration, it is possible to further improve the output density of the battery 2000.

The solid electrolyte included in the electrolyte layer 202 may include a sulfide solid electrolyte.

According to the above configuration, since a sulfide solid electrolyte having excellent reduction stability is included, a low-potential negative electrode material such as graphite or metal lithium can be used, thereby improving the energy density of the battery 2000.

As the sulfide solid electrolyte, Li₂S-P₂S₅, Li₂S-SiS₂, Li₂S-B₂S₃, Li₂S-GeS₂, Li_{3.25}Ge_{0.25}P_{1.75}S₄, Li₁₀GeP₂S₁₂, or the like can be used. LiX, Li₂O, MO_{q}, LiₚMO_{q}, or the like may be added to these. Here, the element X in "LiX" is at least one element selected from the group consisting of F, CI, Br, and I. The element M in "MO_{q}" and "LiₚMO_{q}" is at least one element selected from the group consisting of P, Si, Ge, B, Al, Ga, In, Fe, and Zn. The symbols p and q in "MO_{q}" and "LiₚMO_{q}" are each an independent natural number.

Examples which can be used as the sulfide solid electrolyte include a lithium-containing sulfide such as Li₂S-P₂S₅, Li₂S-SiS₂, Li₂S-B₂S₃, Li₂S-GeS₂, Li₂S-SiS₂-LiI, Li₂S-SiS₂-Li₃PO₄, Li₂S-Ge₂S₂, Li₂S-GeS₂-P₂S₅, and Li₂S-GeS₂-ZnS.

The solid electrolyte included in the electrolyte layer 202 may include at least one selected from the group consisting of an oxide solid electrolyte, a polymer solid electrolyte, and a complex hydride solid electrolyte.

Examples which can be used as the oxide solid electrolyte include: a NASICON solid electrolyte typified by LiTi₂(PO₄)₃ and element-substituted substances thereof; a (LaLi)TiO₃-based perovskite solid electrolyte; a LISICON solid electrolyte typified by Li₁₄ZnGe₄O₁₆, Li₄SiO₄, and LiGeO₄ and element-substituted substances thereof; a garnet solid electrolyte typified by Li₇La₃Zr₂O₁₂ and element-substituted substances thereof; Li₃N and H-substituted substances thereof; Li₃PO₄ and N-substituted substances thereof; and glass or glass ceramics in which a material such as Li₂SO₄ or Li₂CO₃ has been added to a base material including a Li-B-O compound such as LiBO₂ or Li₃BO₃.

Examples which can be used as the oxide solid electrolyte include a lithium-containing metal oxide such as Li₂O-SiO₂ and Li₂O-SiO₂-P₂O₅, a lithium-containing metal nitride such as LiₓP_{y}O_{1-z}N_{z}, lithium phosphate (Li₃PO₄), and a lithium-containing transition metal oxide such as lithium titanium oxide.

Examples which can be used as the oxide solid electrolyte include Li₇La₃Zr₂O₁₂(LLZ), Li_{1.3}Al_{0.3}Ti_{1.7}(PO₄)₃(LATP), and (La, Li)TiO₃(LLTO).

Examples which can be used as the polymer solid electrolyte include a compound of a polymer compound and a lithium salt. The polymer compound may have an ethylene oxide structure. Owing to having an ethylene oxide structure, a polymer compound can contain a large amount of lithium salt, thereby further increasing the ionic conductivity. Examples which can be used as the lithium salt include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. As the lithium salt, one lithium salt selected from these may be used alone, or a mixture of two or more lithium salts selected from these may be used.

As the complex hydride solid electrolyte, LiBH₄-LiI or LiBH₄-P₂S₅ can be used, for example.

The electrolyte layer 202 may include only one solid electrolyte selected from the group of the solid electrolytes described above, or may include two or more solid electrolytes selected from the group of the solid electrolytes described above. The plurality of solid electrolytes have different compositions. The electrolyte layer 202 may include, for example, a halide solid electrolyte and a sulfide solid electrolyte.

The thickness of the electrolyte layer 202 may be 1 µm or more and 300 µm or less. In the case where the thickness of the electrolyte layer 202 is 1 µm or more, the first electrode 201 and the second electrode 203 are less likely to be short-circuited. In the case where the thickness of the electrolyte layer 202 is 300 µm or less, the battery 2000 can operate at a high power.

The second electrode 203 contributes, as a counter electrode of the first electrode 201, to operations of the battery 2000.

The following describes a case where the first electrode 201 is a negative electrode as an example. In other words, the electrode material 1000 is used for the negative electrode of the battery 2000. In this case, the active material 110 is a negative electrode active material. By using the electrode material 1000 for the negative electrode of the battery 2000, it is possible to further improve the charge capacity of the battery 2000.

In the case where the active material 110 is a negative electrode active material, the negative electrode active material may include at least one selected from the group consisting of graphite, silicon, a silicon alloy, a silicon oxide, tin, a tin alloy, and a tin oxide. The negative electrode active material should desirably include graphite. By using these materials, the battery 2000 having high charge capacity and excellent charge and discharge characteristics can be provided.

In the case where the first electrode 201 includes a negative electrode active material, the second electrode 203 may include a material having properties of occluding and releasing metal ions (e.g., lithium ions), and includes, for example, a positive electrode active material. Examples which can be used as the positive electrode active material include a metal composite oxide, a transition metal fluoride, a polyanion material, a fluorinated polyanion material, a transition metal sulfide, a transition metal oxysulfide, and a transition metal oxynitride. In particular, in the case where a lithium-containing transition metal oxide is used as the positive electrode active material, the manufacturing cost can be reduced and the average discharge voltage can be increased.

The metal composite oxide selected as the positive electrode active material included in the second electrode 203 may include Li and at least one element selected from the group consisting of Mn, Co, Ni, and Al. Such materials include Li(NiCoAl)O₂, Li(NiCoMn)O₂, and LiCoO₂. The positive electrode active material may be, for example, Li(NiCoMn)O₂.

Even in the case where the first electrode 201 is a positive electrode, the electron conduction path and the lithium-ion conduction path in the first electrode 201 are achieved, thereby improving the charge capacity. The configuration in which the first electrode 201 is a positive electrode also can be implemented in the same manner as the configuration in which the first electrode 201 is a negative electrode.

In the case where the first electrode 201 includes a positive electrode active material, the second electrode 203 includes, for example, a negative electrode active material. As the negative electrode active material, a metal material, a carbon material, an oxide, a nitride, a tin compound, a silicon compound, or the like can be used. The metal material may be an elemental metal. Alternatively, the metal material may be an alloy. Examples of the metal material include lithium metal and a lithium alloy. Examples of the carbon material include natural graphite, coke, semi-graphitized carbon, a carbon fiber, spherical carbon, artificial graphite, and amorphous carbon. From the viewpoint of capacity density, silicon (Si), tin (Sn), a silicon compound, or a tin compound can be suitably used.

The second electrode 203 may include a solid electrolyte. According to the above configuration, the lithium-ion conductivity inside the second electrode 203 can be increased, thereby enabling the battery 2000 to operate at a high power. As the solid electrolyte included in the second electrode 203, the materials exemplified as the solid electrolyte included in the electrolyte layer 202 may be used.

The median diameter of particles of the active material included in the second electrode 203 may be 0.1 µm or more and 100 µm or less. In the case where the median diameter of the particles of the active material is 0.1 µm or more, the particles of the active material and the solid electrolyte can form a favorable dispersion state. This improves the charge capacity of the battery 2000. In the case where the median diameter of the particles of the active material is 100 µm or less, the diffusion rate of lithium in the particles of the active material sufficiently improves. This enables the battery 2000 to operate at a high power.

The median diameter of the particles of the active material may be larger than the median diameter of particles of the solid electrolyte. Thus, it is possible to form a favorable dispersion state between the active material and the solid electrolyte.

In the volume ratio "v: 100 - v" of the active material to the solid electrolyte included in the second electrode 203, 30 ≤ v ≤ 95 may be satisfied. In the case where 30 ≤ v is satisfied, the energy density of the battery 2000 is sufficiently achieved. Furthermore, in the case where v ≤ 95 is satisfied, the battery 2000 can operate at a high power.

The thickness of the second electrode 203 may be 10 µm or more and 500 µm or less. In the case where the thickness of the second electrode 203 is 10 µm or more, the energy density of the battery 2000 is sufficiently achieved. In the case where the thickness of the second electrode 203 is 500 µm or less, the battery 2000 can operate at a high power.

The second electrode 203 may include the electrode material 1000. In this case, any configuration shown in the example of the first electrode 201 may be used.

According to the above configuration, the lithium-ion conductivity and the electron conductivity inside the second electrode 203 can be increased, thereby improving the charge capacity.

The first electrode 201 and the second electrode 203 may include one or more solid electrolytes for the purpose of increasing the ionic conductivity. As the solid electrolyte, the materials exemplified as the solid electrolyte included in the electrolyte layer 202 may be used.

At least one of the first electrode 201, the electrolyte layer 202, and the second electrode 203 may contain a binder for the purpose of improving the adhesion between particles. The binder is used to improve the binding properties of the materials of the electrodes. Examples of the binder include polyvinylidene fluoride, polytetrafluoroethylene, polyethylene, polypropylene, aramid resin, polyamide, polyimide, polyamide-imide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyethersulfone, hexafluoropolypropylene, styrene-butadiene rubber, and carboxymethylcellulose. Furthermore, as the binder can be used a copolymer of two or more materials selected from tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. Moreover, two or more selected from these may be mixed to be used as the binder.

At least one of the first electrode 201 and the second electrode 203 may contain a conductive additive for the purpose of increasing the electronic conductivity. Examples of the conductive additive include: graphites such as natural graphite and artificial graphite; carbon blacks such as acetylene black and Ketjenblack; conductive fibers such as a carbon fiber and a metal fiber; metal powders such as a fluorinated carbon powder and an aluminum powder; conductive whiskers such as a zinc oxide whisker and a potassium titanate whisker; conductive metal oxides such as titanium oxide; and conductive polymer compounds such as a polyaniline compound, a polypyrrole compound, and a polythiophene compound. Using a carbon conductive additive can seek cost reduction.

In the case where the electrode material 1000 distinctly contains a conductive additive and a binder that do not contribute to charge and discharge, the conductive additive and the binder are excluded from calculation of the total perimeter. For example, the conductive additive and the binder can be distinguished from the solid electrolyte 100 and the active material 110 by element mapping of the cross section or the like. The total length of the interface 120 between the solid electrolyte 100 and the active material 110 can be calculated excluding the conductive additive and the binder.

The battery 2000 of Embodiment 2 can be configured as batteries having various shapes such as a coin type, a cylindrical type, a prismatic type, a sheet type, a button type, a flat type, and a stack type.

### Examples

The details of the present disclosure will be described below with reference to examples and comparative examples.

### <<Example 1>>

### [Production of Sulfide Solid Electrolyte A]

In an argon glove box in an Ar atmosphere with a dew point of -60°C or lower, Li₂S and P₂S₅ were weighed at a molar ratio of Li₂S: P₂S₅ = 75: 25. These were pulverized for mixing in a mortar to obtain a mixture. Then, the mixture was subjected to a milling process at 510 rpm for 10 hours with a planetary ball mill (Type P-7, manufactured by Fritsch GmbH) to obtain a glassy solid electrolyte. The glassy solid electrolyte was heat-treated in an inert atmosphere under conditions at 270°C for 2 hours. Thus, Li₂S-P₂S₅, which is a glass-ceramic solid electrolyte, was obtained as a sulfide solid electrolyte A.

### [Production of Electrode Material]

In an argon glove box, spherical graphite having a median diameter of 8 µm and the sulfide solid electrolyte A were weighed at a weight ratio of 40: 60. These were mixed in an agate mortar to produce an electrode material of Example 1.

The electrode material of Example 1 is a negative electrode material.

### <<Example2>>

### [Production of Sulfide Solid Electrolyte B]

In an argon glove box in an Ar atmosphere with a dew point of -60°C or lower, Li₂S and P₂S₅ were weighed at a molar ratio of Li₂S: P₂S₅ = 75: 25. A mixture of Li₂S, P₂S₅ and ethyl propionate was placed in a test tube resin vessel together with zirconia balls having a diameter of 4 mm, and the resin vessel was sealed hermetically.

Then, the resin vessel was set in a shaker (CUTE MIXER-CM1000, manufactured by AS ONE Corporation) and was shaken at a speed of approximately 1500 times/min for 6 hours to obtain a suspension. The zirconia balls were removed from the suspension, and the obtained suspension was centrifuged in a centrifuge (GR22GIII, manufactured by Hitachi Koki Corporation). The resultant supernatant solvent was removed to collect a paste-like sample.

Next, the paste-like sample was dried in vacuum at room temperature for 30 minutes to obtain a white powder. Finally, the powdery sample was subjected to a vacuum heat treatment at 170°C for 2 hours to obtain a sulfide solid electrolyte B.

### [Production of Electrode Material]

In an argon glove box, spherical graphite having a median diameter of 8 µm and the sulfide solid electrolyte B were weighed at a weight ratio of 60: 40. These were mixed in an agate mortar to produce an electrode material of Example 2.

The electrode material of Example 2 is a negative electrode material.

### «Example 3»

### [Production of Electrode Material]

An electrode material of Example 3 was obtained by the same method as that of Example 2, except that the weight ratio of spherical graphite to the sulfide solid electrolyte B was changed to 80: 20.

The electrode material of Example 3 is a negative electrode material.

### «Example 4»

### [Production of Sulfide Solid Electrolyte C]

A sulfide solid electrolyte A was produced by the same method as that of Example 1, and the sulfide solid electrolyte A was pulverized for atomization by a jet mill device (NJ-50, manufactured by Aishin Nano technologies CO., LTD.) in a dry atmosphere with a dew point of -40°C or lower. Then, the atomized sulfide solid electrolyte was heat-treated in an inert atmosphere under conditions of 270°C and 2 hours to obtain a sulfide solid electrolyte C.

### [Production of Electrode Material]

In an argon glove box, spherical graphite having a median diameter of 8 µm and the sulfide solid electrolyte C were weighed at a weight ratio of 40: 60. These were mixed in an agate mortar to produce an electrode material of Example 4.

The electrode material of Example 4 is a negative electrode material.

### «Example 5»

### [Production of Electrode Material]

An electrode material of Example 5 was obtained by the same method as that of Example 4, except that the weight ratio of spherical graphite to the sulfide solid electrolyte C was changed to 60: 40.

The electrode material of Example 5 is a negative electrode material.

### «Example 6»

### [Production of Electrode Material]

An electrode material of Example 6 was obtained by the same method as that of Example 4, except that the weight ratio of spherical graphite to the sulfide solid electrolyte C was changed to 80: 20.

The electrode material of Example 6 is a negative electrode material.

### «Example 7»

### [Production of Electrode Material]

In an argon glove box, spherical graphite having a median diameter of 8 µm and a silicon compound having a median diameter of 8 µm were weighed at a weight ratio of 90: 10. These were mixed in an agate mortar to obtain a mixed negative electrode active material. The mixed negative electrode active material and the solid electrolyte C were weighed at a weight ratio of 70: 30. The mixed negative electrode active material, the solid electrolyte C, a solvent, a dispersant, and a thickener were mixed to obtain a negative electrode slurry. This negative electrode slurry was applied onto a copper foil, and the resultant coating was dried. Thus, an electrode material of Example 7 was produced on the copper foil.

### The electrode material of Example 7 is a negative electrode material.

### <<Comparative Example 1>>

An electrode material of Comparative Example 1 was obtained by the same method as that of Example 1, except that the weight ratio of spherical graphite to the sulfide solid electrolyte B was changed to 40: 60.

The electrode material of Comparative Example 1 is a negative electrode material.

### <<Comparative Example 2>>

An electrode material of Comparative Example 2 was obtained by the same method as that of Example 1, except that the weight ratio of spherical graphite to the sulfide solid electrolyte A was changed to 80: 20.

The electrode material of Comparative Example 2 is a negative electrode material.

### «Comparative Example 3»

### [Production of Sulfide Solid Electrolyte D]

A sulfide solid electrolyte A was produced by the same method as that of Example 1. In an argon glove box, the sulfide solid electrolyte A was classified with a precision sieve having an aperture size of 10 µm, and the powder which has passed through the sieve was collected to obtain a sulfide solid electrolyte D.

### [Production of Electrode Material]

In an argon glove box, spherical graphite having a median diameter of 8 µm and the sulfide solid electrolyte D were weighed at a weight ratio of 80: 20. These were mixed in an agate mortar to produce an electrode material of Comparative Example 3.

The electrode material of Comparative Example 3 is a negative electrode material.

### [Filling Rate Measurement 1]

The following steps were performed with use of the electrode materials of Examples 1 to 3 and Comparative Examples 1 and 2.

First, 80 mg of the electrode material was put into a metal outer cylinder and was pressure-molded at a pressure of 360 MPa to obtain a pellet of the electrode material. Next, the film thickness and the weight of the pellet were measured. Finally, the filling rates of the electrode materials of Examples 1 to 3 and Comparative Examples 1 and 2 were each calculated by using the inner diameter of the outer cylinder, the true density of the active material, and the true density of the solid electrolyte.

### [Filling Rate Measurement 2]

The following steps were performed with use of the electrode materials of Examples 4 to 6 and Comparative Example 3.

First, 80 mg of the electrode material was put into a metal outer cylinder and was pressure-molded at a pressure of 720 MPa to obtain a pellet of the electrode material. Next, the film thickness and the weight of the pellet were measured. Finally, the filling rates of the electrode materials of Examples 4 to 6 and Comparative Example 3 were each calculated by using the inner diameter of the outer cylinder, the true density of the active material, and the true density of the solid electrolyte.

### [Filling Rate Measurement 3]

The following steps were performed with use of the electrode material of Example 7.

The electrode material of Example 7 was pressure-molded at a pressure of 600 MPa. Then, the weight and the film thickness of the pressure-molded electrode material were measured. The filling rate of the electrode material of Example 7 was calculated by using the true density of each of the materials, namely, the active material, the solid electrolyte, the dispersant, and the thickener.

### [Interfacial Perimeter Measurement 1]

The following steps were performed with use of the electrode materials of Examples 1 and 2 and Comparative Example 1.

First, 80 mg of the electrode material was put into a metal outer cylinder and was pressure-molded at a pressure of 360 MPa to obtain a pellet of the electrode material.

Next, the pellet was processed by a cross section polisher (SM-09010, manufactured by JEOL Ltd.) to form a smooth cross section. At this time, the cross-section process was performed in the thickness direction of the pellet.

The cross section of the pellet was observed with an SEM (SU-70, manufactured by Hitachi High-Technologies Corporation) to obtain a cross-sectional image (magnification: 500 times). The SEM observation region at this time had 4.5 × 10⁴ µm². Since the median diameter D of the spherical graphite serving as the active material was 8 µm, the observation area A satisfied A ≥ (20D)².

Next, the cross-sectional image was analyzed with image processing software Image J. First, the white color was designated for the background in the SEM observation region to obtain a binary image. Next, particle determination of the active material was performed from the binary image by the Analyze Particles function. To remove noise after the image processing, particles having a cross-sectional area of 1% or less with respect to the average cross-sectional area of particles subjected to the particle determination in the cross-sectional image were excluded, and the total perimeter of the active material determined as particles was calculated. Finally, the total perimeter calculated from the cross-sectional image was divided by the image analysis area to calculate the interface length between the active material and the solid electrolyte per unit area, that is, the interfacial perimeter.

In the present description, the term "particle determination" means determination as to whether a particle is present.

### [Interfacial Perimeter Measurement 2]

The interfacial perimeters in the electrode materials of Example 3 and Comparative Example 2 were measured by the same method as that of Measurement 1, except that the black color was designated for the background.

### [Interfacial Perimeter Measurement 3]

The interfacial perimeters in the electrode materials of Examples 4 and 5 were measured by the same method as that of Measurement 1, except that the pressure for pressure-molding was set to 720 MPa.

### [Interfacial Perimeter Measurement 4]

The interfacial perimeters in the electrode materials of Example 6 and Comparative Example 3 were measured by the same method as that of Measurement 1, except that the pressure for pressure-molding was set to 720 MPa and the black color was designated for the background.

### [Interfacial Perimeter Measurement 5]

The following steps were performed with use of the electrode material of Example 7.

First, 80 mg of the sulfide solid electrolyte A and the electrode material of Example 7 formed on the copper foil were stacked in a metal outer cylinder in this order. The resulting stack of the copper foil/the electrode material/the sulfide solid electrolyte A was pressure-molded at a pressure of 600 MPa to obtain a pellet. The sulfide solid electrolyte A in the pellet was a supporting layer for the electrode material. Integral molding with the electrode material facilitates handling of the electrode material after the pressure-molding.

Then, the interfacial perimeter in the electrode material of Example 7 was measured by the same method as that of Measurement 1, except that the black color was designated for the background and the acquisition magnification of the cross-sectional image was 800 times.

The electrode material of Example 7 contains a binder, the dispersant, and the thickener. However, the sum proportion of the binder, the dispersant, and the thickener in the entire electrode material is less than 0.1 wt%, which was extremely low. Accordingly, in the measurement of the interfacial perimeter, an operation of excluding the thickener was not performed.

### [Secondary Battery Production 1]

The following steps were performed with use of the electrode materials of Example 1 and Comparative Example 1 and the sulfide solid electrolyte A.

First, 80 mg of the sulfide solid electrolyte A and 12 mg of the electrode material were stacked in an insulating outer cylinder in this order. These were pressure-molded at a pressure of 360 MPa to obtain a first electrode and an electrolyte layer.

Next, metal In (thickness: 200 µm), metal Li (thickness: 300 µm), and metal In (thickness: 200 µm) were stacked as a second electrode on the electrolyte layer in this order. The resulting stack was pressure-molded at a pressure of 80 MPa to produce a stack including the first electrode, the electrolyte layer, and the second electrode.

Next, stainless steel current collectors were disposed on the top and the bottom of the stack, and current collector leads were attached to the current collectors.

Finally, an insulating ferrule was used to seal the insulating outer cylinder and block the inside of the insulating outer cylinder from the outside air atmosphere. Thus, a battery was produced.

In this way, the batteries of Example 1 and Comparative Example 1 were each produced.

### [Secondary Battery Production 2]

A battery of Example 2 was produced by the same method as that of Example 1, except that 8 mg of the electrode material of Example 2 was used instead of the electrode material of Example 1.

### [Secondary Battery Production 3]

Batteries of Example 3 and Comparative Example 2 were produced by the same method as that Example 1, except that 6 mg of the electrode material of Example 3 or Comparative Example 2 was used instead of the electrode material of Example 1.

### [Secondary Battery Production 4]

A battery of Example 4 was produced by the same method as that of Example 1, except that 12 mg of the electrode material of Example 4 was used instead of the electrode material of Example 1 and the pressure for pressure-molding the electrode material was changed to 720 MPa.

### [Secondary Battery Production 5]

A battery of Example 5 was produced by the same method as that of Example 1, except that 8 mg of the electrode material of Example 5 was used instead of the electrode material of Example 1 and the pressure for pressure-molding the electrode material was changed to 720 MPa.

### [Secondary Battery Production 6]

Batteries of Example 6 and Comparative Example 3 were produced by the same method as that of Example 1, except that 6 mg of the electrode material of Example 6 or Comparative Example 3 was used instead of the electrode material of Example 1 and the pressure for pressure-molding the electrode material was changed to 720 MPa.

### [Secondary Battery Production 7]

A battery of Example 7 was produced by the same method as that of Example 1, except that: the electrode material (mass per unit area: 16 mg) of Example 7 formed on the copper foil was used instead of the electrode material of Example 1; the sulfide solid electrolyte C was used instead of the sulfide solid electrolyte A; and the pressure for pressure-molding the electrode material was changed to 600 MPa.

### [Charge and Discharge Test 1]

A charge and discharge test was performed with use of the batteries of Examples 1 to 6 and Comparative Examples 1 to 3 under the following conditions.

The battery was placed in a thermostatic chamber at 25°C.

Constant-current charge of the battery was performed at a current value of 70 µA at 0.04 C rate (25-hour rate) with respect to the theoretical capacity of the battery while pressurization of the battery to 150 MPa was performed by a pressure jig. The charge was ended at a voltage of -0.62 V.

Additionally, the term "charge" here means the proceeding direction of a Li insertion reaction into spherical graphite serving as the negative electrode active material in the first electrode.

Furthermore, alloy InLi used for the second electrodes of the batteries of Examples 1 to 6 and Comparative Examples 1 and 2 exhibits a potential of 0.62 V (vs. Li).

In other words, the end-of-charge voltage of -0.62 V for the batteries of Examples 1 to 6 and Comparative Examples 1 and 2 corresponds to 0 V (vs. Li) in terms of Li reference potential.

In this way, the charge capacities of the batteries of Examples 1 to 6 and Comparative Examples 1 to 3 were measured. The results are shown in Table 1 below. The charge capacity represents the charge capacity per unit weight of the active material.

### [Charge and Discharge Test 2]

A charge and discharge test was performed with use of the battery of Example 7 under the following conditions.

The battery was placed in a thermostatic chamber at 25°C.

Constant-current charge of the battery was performed at a current value of 140 µA at 0.04 C rate (25-hour rate) with respect to the theoretical capacity of the battery while pressurization of the battery to 150 MPa was performed by a pressure jig. The charge was ended at a voltage of -0.62 V.

Additionally, the term "charge" here means the proceeding direction of a Li insertion reaction into spherical graphite serving as the negative electrode active material in the first electrode.

Furthermore, alloy InLi used for the second electrode of the battery of Example 7 exhibits a potential of 0.62 V (vs. Li).

In other words, the end-of-charge voltage of -0.62 V for the battery of Example 7 corresponds to 0 V (vs. Li) in terms of Li reference potential.

In this way, the charge capacity of the battery of Example 7 was measured. The results are shown in Table 1 below.

**[Table 1]**

| | Content of active material (wt%) | Length of interface (µm/µm²) | Filling rate (%) | Charge capacity (mAh/g) |
|---|---|---|---|---|
| Example 1 | 40 | 0.291 | 80.0 | 369 |
| Example 2 | 60 | 0.420 | 80.6 | 333 |
| Example 3 | 80 | 0.571 | 84.2 | 350 |
| Example 4 | 40 | 0.292 | 89.9 | 329 |
| Example 5 | 60 | 0.387 | 92.3 | 380 |
| Example 6 | 80 | 0.392 | 92.4 | 292 |
| Example 7 | 70 | 0.444 | 93.1 | 531 |
| Com parative Example 1 | 40 | 0.302 | 77.6 | 128 |
| Com parative Example 2 | 80 | 0.137 | 84.1 | 224 |
| Com parative Example 3 | 80 | 0.229 | 89.4 | 70.5 |

### «Discussion»

As shown in Table 1, it was ascertained that, by using an electrode material having an interfacial perimeter between the active material and the solid electrolyte of 0.29 µm/µm² or more and having a filling rate of 80% or more, the charge capacity of the battery per unit weight of the active material improves.

The results of Example 7 show that even in the case where a silicon compound is included as the active material in the electrode material, the charge capacity improves as long as the interfacial perimeter between the active material and the solid electrolyte is 0.29 µm/µm² or more and the filling rate is 80% or more. In other words, the active material in the electrode material of the present disclosure is not limited to a carbon material such as graphite. It was ascertained from the examples that this is effective even in the case where other active materials are used.

The difference between the electrode material used for the battery of Example 1 and the electrode material used for the battery of Comparative Example 1 lies only in the method of producing the sulfide solid electrolyte. This indicates that it is difficult to form a favorable dispersion state of the active material and the solid electrolyte only by adjusting the content of the active material in the electrode material.

### INDUSTRIAL APPLICABILITY

The battery of the present disclosure can be utilized as, for example, an all-solid-state battery.

## Claims

1. An electrode material comprising:
an active material; and
a solid electrolyte, wherein
a length of an interface between the active material and the solid electrolyte per unit area of a cross section of the electrode material is 0.29 µm/µm² or more, and
a filling rate of the electrode material is 80% or more.

2. The electrode material according to claim 1, wherein
a content of the active material in the electrode material is 40 wt% or more and 80 wt% or less.

3. The electrode material according to claim 1 or 2, wherein
the solid electrolyte has lithium-ion conductivity.

4. The electrode material according to any one of claims 1 to 3, wherein
the length of the interface is 0.95 µm/µm² or less.

5. The electrode material according to claim 4, wherein
the length of the interface is 0.571 µm/µm² or less.

6. The electrode material according to any one of claims 1 to 5, wherein
the filling rate is 99% or less.

7. The electrode material according to claim 6, wherein
the filling rate is 93.1% or less.

8. The electrode material according to any one of claims 1 to 7, wherein
the active material is a negative electrode active material.

9. The electrode material according to claim 8, wherein
the negative electrode active material comprises at least one selected from the group consisting of graphite, silicon, a silicon alloy, a silicon oxide, tin, a tin alloy, and a tin oxide.

10. The electrode material according to claim 9, wherein
the negative electrode active material comprises graphite.

11. The electrode material according to any one of claims 1 to 7, wherein
the active material is a positive electrode active material.

12. The electrode material according to claim 11, wherein
the positive electrode active material comprises a metal composite oxide.

13. The electrode material according to claim 12, wherein
the metal composite oxide comprises:
at least one selected from the group consisting of Mn, Co, Ni, and Al; and Li.

14. A battery comprising:
a first electrode;
a second electrode; and
an electrolyte layer positioned between the first electrode and the second electrode, wherein
at least one selected from the group consisting of the first electrode and the second electrode comprises the electrode material according to any one of claims 1 to 13.
